# EUROPEAN PATENT SPECIFICATION

(11) **EP 1 617 689 B1**
(45) Date of publication and mention of the grant of the patent: **09.02.2011**
(21) Application number: 04103420.8
(22) Date of filing: 16.07.2004
(51) Int. Cl.: H04W 84/08

(54) **Transmit channel policing system, device and method**
Übertragungskanalüberwachungssystem, Vorrichtung und Verfahren
Appareil, méthode et système de contrôle du canal de transmission.

(43) Date of publication of application: 18.01.2006
(73) Proprietor: RESEARCH IN MOTION LIMITED, Waterloo, Ontario N2L 3W8 (CA)
(72) Inventor: Yau, Janus Sing, Ottawa, Ontario K1Y 0N9 (CA); Rao, Padakandla Krishna, Kanata, Ontario K2W 1C4 (CA)
(74) Representative: MERH-IP Matias Erny Reichl Hoffmann

(56) References cited:
- WO-A-2004/036787
- US-A1- 2002 150 091
- US-B1- 6 295 284

## Description

The invention relates to wireless communications systems and more particularly to policing of transmit channel possession in wireless communications systems providing half-duplex voice communications services.

### Background of the Invention

Communication systems are available which provide walkie-talkie-like functionality or similar half-duplex voice functionality which may take the form of PTT™ (push-to-talk™) over a dispatch service, PTT™ over cellular (PoC) services (part of the OMA standard), or otherwise. When referred to herein, walkie-talkie-like functionality and half-duplex voice functionality are to be taken generally to mean any voice communication functionality delivered via a network or networks which at any one time is capable of transmitting voice communication from a talking or transmitting party's device to a listening or receiving party's device, but does not simultaneously transmit voice communication from the receiving party's device to the talking party's device, while the talking party's device is transmitting voice to the receiving party's device. During an active PTT™ session or dispatch call session, only one user device (the "talker's" device) participating in the session may be designated as the transmitting or talking device at any one time. The communication can be one to one or one to many. A user device gains the role of transmitting device by requesting the talk/transmit channel from the network and by being granted the talk/transmit channel by the network. While a talker's device is in possession of the transmit channel (during a talk period), all of the other devices (listeners' devices) in the active dispatch call session are in listener mode and cannot transmit voice until the transmitting device requests the network to terminate the talk period and release the talk/transmit channel. Times during which the talk/transmit channel is not occupied are idle periods. In standard implementations of PTT™, the user interface of, for example, a wireless device, includes a "talk" button to allow the user to control the sending of requests to acquire and release the talk/transmit channel, these requests being sent over a logical control channel to the network.

An example of a system providing PTT™ functionality as part of its dispatch services is the IDEN™ system of Motorola™. Other example systems which can provide such PTT™ services are 1xRTT CDMA, UMTS, GSM/GPRS, and TDMA. Push-to-talk™ service may be provided as an optional half-duplex service over existing network systems which also provide for full duplex communication, or may be provided as a service over network systems which provide only half-duplex communication.

United States Patent Application Publication No. US 2002/0150091 A1 and PCT Application with International Publication No. WO 2004/036787 A1 disclose systems in which permission to speak is given on the basis of a limited time period a user at a wireless device can be given the privilege to speak.

According to one broad aspect, the invention provides a system comprising a talk control element for use with a network system adapted to deliver walkie-talkie-like communications capabilities between wireless devices, the network system allowing only one wireless device to occupy a talk channel at a given time, the talk control element being adapted to transmit at least one parameter to each wireless device, said parameter indicating an amount of time each wireless device is allowed to continuously occupy the talk channel, and each wireless device comprising a talk processing element for processing said parameter, starting a channel when a transmit channel has been granted and releasing said transmit channel when the time indicated by said parameter has expired.

In some embodiments, a talk control element forms part of and in combination with the network system.

In some embodiments, the talk control element is external to the network system.

In some embodiments, the at least one parameter comprises a maximum talk time parameter for each wireless device representing a maximum amount of time the wireless device can continuously occupy the talk channel.

In some embodiments, the at least one parameter further comprises a back off time parameter to each wireless device representing a minimum time after releasing a talk channel before the wireless device can again request the talk channel.

In some embodiments, the at least one parameter comprises a back off time parameter for each wireless device representing a minimum time after releasing a talk channel before the wireless device can again request the talk channel.

In some embodiments, a network system is adapted to send the parameters upon registration of the wireless device.

In some embodiments, a network system is adapted to, for each wireless device, send the parameters upon registration of the wireless device only if a change to at least one of the parameters has occurred.

In some embodiments, a network system in combination with a plurality of said wireless devices, each wireless device comprising a talk processing element for processing the at least one parameter, and allowing requests for the talk channel to be generated in accordance with the at least one parameter.

In some embodiments, each wireless device automatically releases the talk channel after expiry of a period of time represented by the maximum talk time parameter for the wireless device.

In some embodiments, the wireless device does not allow a request for the talk channel to be generated for a period of time represented by the back off time parameter for the wireless device.

In some embodiments, the network is implemented using at least one of PoC, IDEN, 1xRTT CDMA, UMTS, GSM/GPRS and TDMA.

According to another broad aspect, the invention provides a wireless device adapted to participate in a network delivered walkie-talkie-like communications session in a network system allowing only one wireless device to occupy a talk channel at a given time, the wireless device comprising: means for receiving at least one parameter from a talk control element, said parameter indicating an amount of time said wireless device is allowed to continuously occupy the talk channel; and a talk processing element for processing said parameter, starting a channel when a transmit channel has been granted and releasing said transmit channel when the time indicated by said parameter has expired.

In some embodiments, a wireless device is adapted to control amounts of time the wireless device is allowed to continuously occupy a talk channel for the session in accordance with at least one parameter received from the network.

In some embodiments, a wireless device is adapted to automatically release the talk channel after continuously occupying the talk channel for a specified period of time.

In some embodiments, a wireless device is adapted to prevent the generation of a request for the talk channel for a specified period of time following release of the talk channel by the wireless device.

According to another broad aspect, the invention provides a method of controlling a wireless device in a network system configured to deliver walkie-talkie-like communications capabilities between wireless devices, the network system allowing only one wireless device to occupy a talk channel at a given time, the method comprising: transmitting at least one parameter to each wireless device, said parameter indicating an amount of time each wireless device is allowed to continuously occupy the talk channel; and at each wireless device processing said parameter, starting a channel when a transmit channel has been granted and releasing said transmit channel when the time indicated by said parameter has expired.

### Brief Description of the Drawings

Preferred embodiments of the invention will now be described with reference to the attached drawings in which:
Figure 1A is a block diagram illustrating an example active PTT™ session of a group according to an example embodiment of the invention in which talk control is performed by the network providing the PTT session;
Figure 1B is a block diagram illustrating an active PTT™ session of a group according to an example embodiment of the invention in which talk control is performed external to the network providing the PTT session;
Figure 2 is a schematic diagram of an example implementation of a wireless device provided by an embodiment of the invention;
Figure 3 is a flow diagram illustrating the steps performed in one embodiment of the invention for transmit channel policing;
Figure 4 is a flow diagram illustrating the steps performed in another embodiment of the invention for transmit channel policing;
Figure 5 is a flow diagram illustrating the steps performed in an embodiment of the invention for transmit channel policing parameter provisioning; and
Figure 6 is a flow diagram illustrating the steps performed in another embodiment of the invention for transmit channel policing parameter provisioning.

### Detailed Description of the Preferred Embodiments

In the particular examples that follow, the walkie-talkie-like capabilities are assumed to be PTT™ capabilities. More generally, embodiments of the invention can be employed with any system providing network delivered walkie-talkie-like capabilities and are not limited to PTT™ capabilities of the examples. A network capable of delivering this will be referred to as a "dispatch network", even though such a network may also deliver non-dispatch functionality.

Users on the receiving end of a push-to-talk™ session held on known systems have no way of communicating to any other user in a group while a user of a transmitting device is transmitting, since the talk/transmit channel is occupied by the transmitting device until released. As such, prior to the present invention, there was no mechanism to prevent a user from indefinitely keeping possession of the talk/transmit channel.

Embodiments of the present invention attempt to mitigate the potential for abuse and the resulting inconvenience due to a user's possessing the transmit/talk channel indefinitely, or repeatedly taking control of the transmit channel without allowing other users participating in the call a chance to speak. In accordance with the preferred embodiments discussed below, methods, systems, and novel user devices, may be used to automatically provide policing of PTT™ transmit channel possession duration and transmit channel requesting frequency.

In preferred embodiments different subscribers may have different rules governing the policing of their PTT™ transmissions based on, for example, the Service Level Agreement(SLA)/policy set for the subscriber.

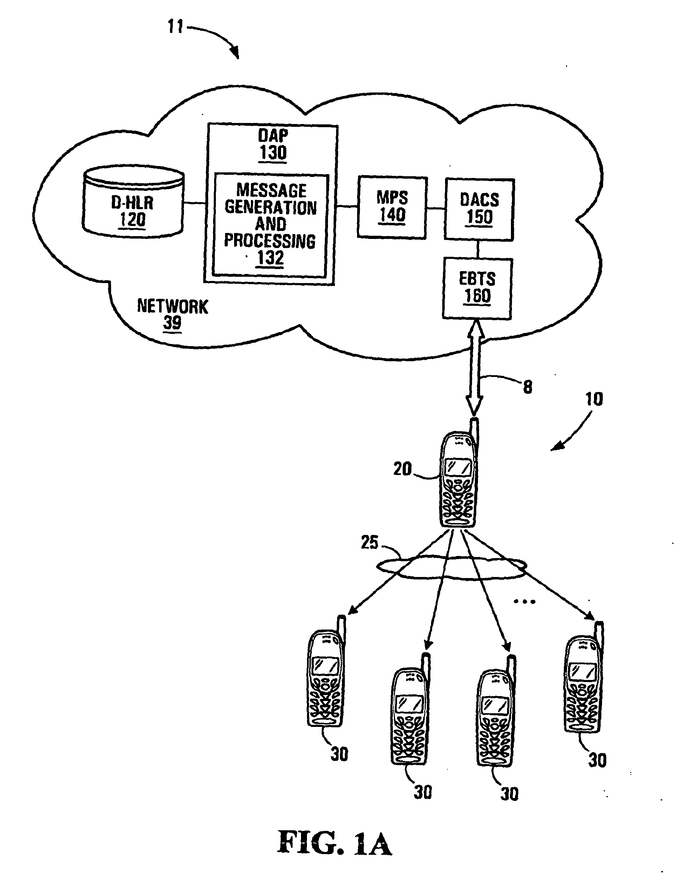

Referring now to Figure 1A, an example of a transmit channel policing method according to an embodiment of the invention will now be described in the context of an active dispatch call session for a PTT™ group of wireless mobile devices in a half-duplex dispatch system.

A communications system, generally indicated by reference numeral 11, which is a modified iDEN™ system, is shown having a PTT™ group (indicated generally by reference numeral 10) consisting of a group of mobile devices participating in an active PTT™ session while a transmit channel is possessed, along with the rest of a dispatch network 39.

The group 10 contains a single mobile device 20 in THD (transmitting in half-duplex) mode which is in talk/transmit mode and in possession of the transmit channel, and a set (only four shown) of devices 30 in RHD (receiving in half-duplex) mode which are in listening mode. It should be understood that transmit channel policing is equally applicable to embodiments in which the dispatch call session only involves two devices (a 1-to-1 session) or which involves more than two devices (a 1-to-many session). To simplify this description, a device in THD mode or RHD mode will be referred to as a THD device or an RHD device respectively. However it is to be understood these are temporary designations for the particular mode of operation of the device at any particular time. During the active session, the users of the RHD devices 30 are referred to as listeners, while the user of the THD device 20 is referred to as the talker. Each device of the specific embodiment shown in Figure 1A is capable of functioning either as a THD device or an RHD device, depending upon which device is in talk/transmit mode and which devices are in listening mode during any particular active session. Upon receipt of a request from a wireless device for the talk channel, if the system grants the device the talk channel, then the device enters THD mode.

The establishment of the wireless links between devices of the users, the routing of voice data packets, and the duplication of voice data packets to each of the devices in listening mode are specific to each implementation of a PTT™ or similar half-duplex voice communication system. These functions are represented abstractly by links 25 which represent all of the system components which are part of the network 39 which are necessary to communicate the voice data sent by the THD device 20 to all of the RHD devices 30 and in general support the functions of the active session. The details of these links are not relevant here.

During the active session, the THD device 20 possesses the talk/transmit channel. A user can release the channel, for example, by releasing the talk button causing the wireless device 20 to initiate a request for release of the channel or to terminate the call, or using any appropriate interface provided on the device.

Within the dispatch network 39 is a dispatch application processor (DAP) 130 which is the processing entity responsible for the overall coordination and control of dispatch services in the iDEN™ system. The DAP 130 is coupled to a dispatch home location register (D-HLR) 120 which is a repository of data for dispatch calling identification and services. In some implementations the D-HLR 120 is resident on the DAP 130. The DAP 130 is coupled to a metro packet switch (MPS) 140 which is in turn coupled to a digital access cross connect switch (DACS) 150. The DACS 150 in turn is coupled to an enhanced base transceiver station (EBTS) 160. The EBTS 160 communicates with user devices over communication channel 8 over the air (OTA). Channel 8 may be outbound and inbound half-duplex voice communication channels (not shown), a control channel, and/or other existing channels (not shown). Various embodiments discussed below may use the DCCH (dedicated control channel) as the communication channel 8 to send and receive messages associated with transmit channel policing. In the course of providing coordination and control of dispatch calls, the DAP 130 may retrieve information from the D-HLR 120 regarding the various services and/or identifications including information pertaining to the particular service level, or policy set which determines the manner in which any particular mobile device is to be policed with respect to the transmit channel policing. In the course of communicating with the user device 20, the DAP 130 sends messages via the MPS 140, the DACS 150, and the EBTS 160 in order to interact with the user device 20.

The DAP 130 also has message generating and processing 132 which is adapted to send information pertaining to transmit channel policing including a maximum talk time, and a back-off time as discussed below. In a preferred embodiment, the message generation and processing 132 is implemented as a change to software already implemented on the DAP 130, but it may be implemented as separate software, hardware, firmware or a combination of these types of functionality. Figure 1A shows a very specific example of network functionality which provides transmit channel policing services. The arrangement of Figure 1A is particularly suitable for iDEN™ applications. It is to be clearly understood that other network side implementations may be employed for delivering the transmit channel policing methods described herein. These other implementations may be specific to iDEN™ or to other dispatch service implementations. The dispatch service may, of course, include additional system components not shown in Figure 1A.

According to a preferred embodiment, during an active session the listener's devices 30 are no longer at the mercy of the THD device 20 in that the transmit/talk channel is no longer entirely under the control of the user of the THD device 20. As will be described below, parameters related to transmit channel policing which are updated or reassigned within the network may be communicated to the THD device 20 upon the device registering with the network, and/or at other times.

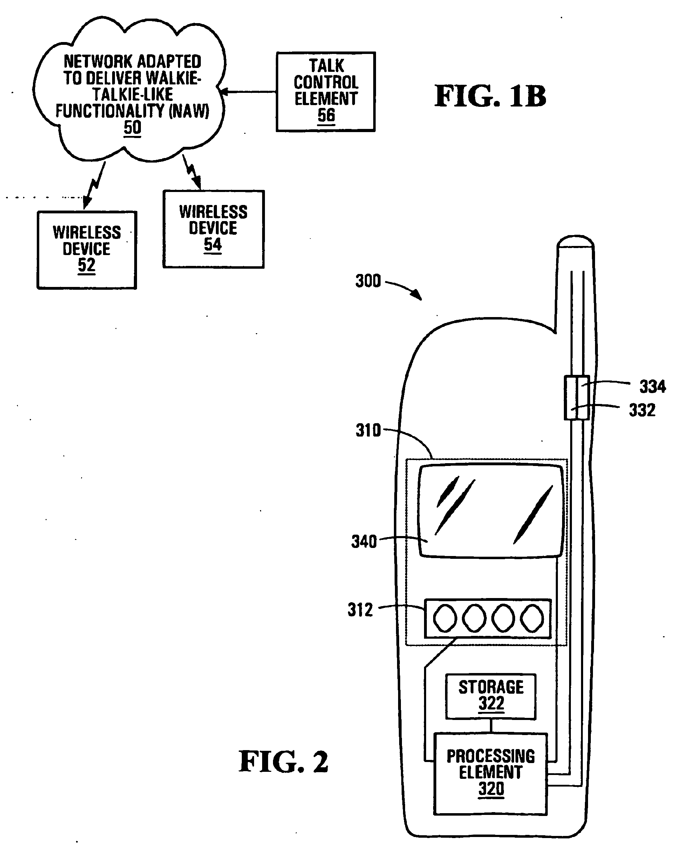

Another embodiment of the invention is illustrated in Figure 1B. In this embodiment, a NAW (network adapted to deliver walkie-talkie like functionality) 50 and a plurality of wireless devices 52,54 (only two shown in the illustrated example). A talk control element 56 has the parameters that are used to control talk channel usage. The talk control element 56 sends these parameters to the wireless devices. In some embodiments, the talk control element 56 is part of the NAW 50. In another embodiment, the talk control element 56 is external to the NAW 50. In the event the talk control element 56 is external to the NAW 50, it might be connected to the dispatch network through a data gateway. For example, a given corporate client may implement the talk channel policing independent of the dispatch network by providing their own talk control element 56. In such an embodiment, the parameters are sent from the talk control element 56 independent of other messages used to implement the walkie-talkie-like functionality, for example by sending packet data. The talk control element may be implemented in hardware, software, firmware to name a few examples or any combination of such elements, and may be centrally located or distributed.

For the embodiment of Figure 1A, the talk control element 56 is implemented as part of the network, and uses the D-HLR to store the parameters.

Referring to Figure 2, an example implementation of a PTT™ capable wireless device 300 provided by an embodiment of the invention will now be described. It is to be clearly understood that this is but one example of a wireless device which can be employed in embodiments of the invention allowing transmit channel policing.

It is also to be clearly understood that many other features will typically be included in an actual wireless device. These features are not shown in the interest of clarity. In the embodiment depicted in Figure 2, the wireless device 300 has a talk request interface in the form of a keypad 312, and has a touchscreen 340. Other embodiments could include any other suitable input/output element(s). The talk request interface is coupled to a processing element 320. The processing element 320 is coupled to message transmission element 332. The message transmission element 332 may share resources with a message reception element 334. The message reception element 334 is coupled to the processing element 320. Elements 332,334 preferably form part of standard reception and transmission capabilities on the wireless device.

The processing element 320 represents any suitable processing capabilities implemented within the wireless device to handle the operation of the algorithms for policing the transmit channel. This element may be implemented as one or a combination of hardware, software, firmware. In a preferred embodiment, the processing element 320 is included as an addition to software capabilities already provided on an existing wireless device.

In operation, the wireless device 300 depicted in Figure 2 is able to operate in a network providing walkie-talkie-like half duplex communications capabilities in THD mode and RHD mode. The device 300 is capable of initiating a group session and requesting the transmit channel from the network, upon initiation by the user. In the embodiment of Figure 2, this initiation is effected by the pressing and holding down of a talk button within the keypad 312. The device does not enter THD mode until the system grants the transmit channel.

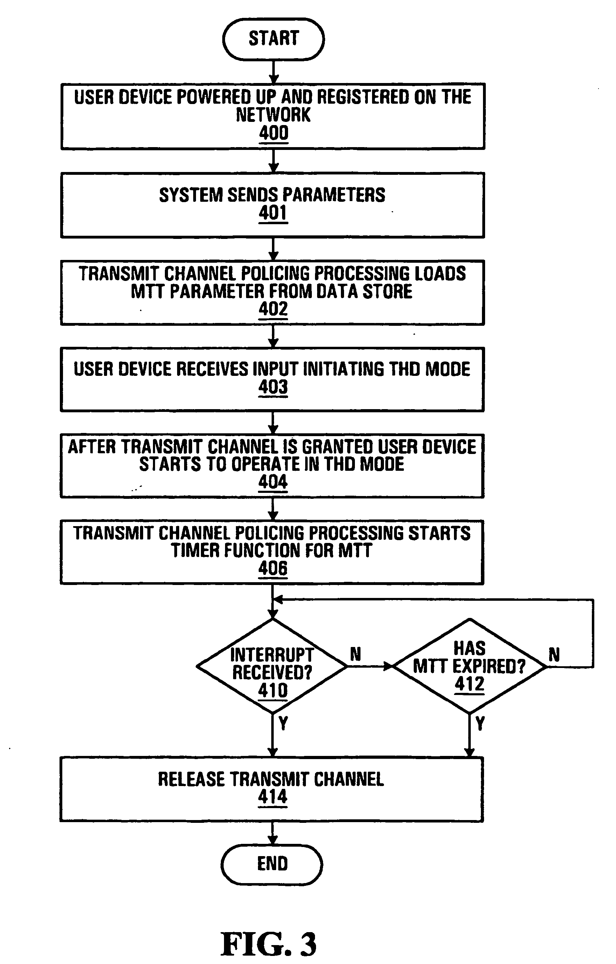

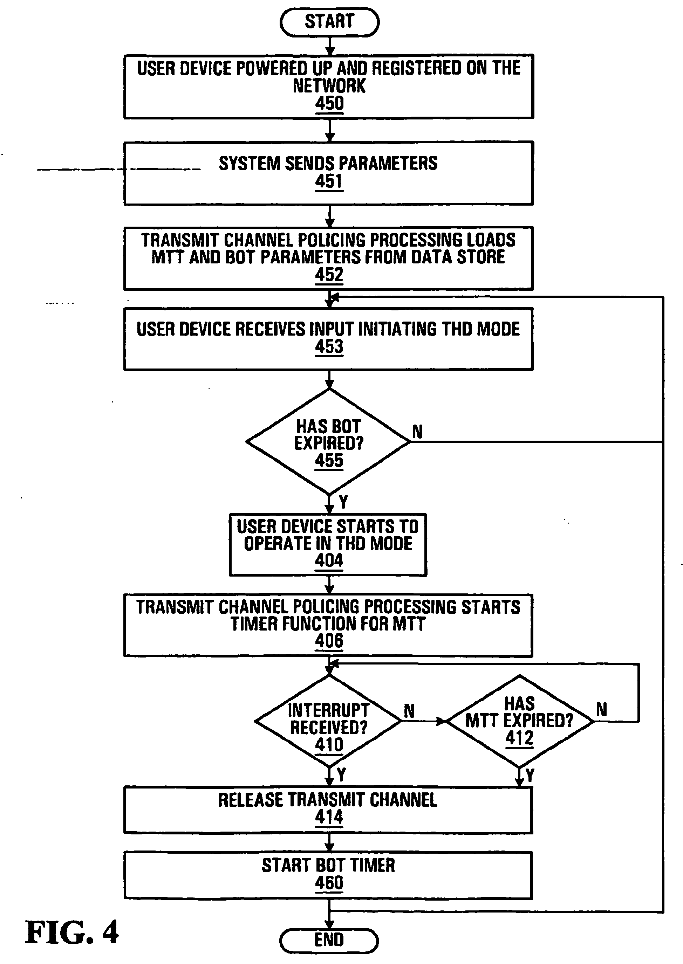

Processing element 320 performs transmit channel policing functions by obtaining any necessary data from storage 322, and commencing a timer function from the time the device enters THD mode. The transmit channel policing is executed preferably in accordance with the method described below with reference to Figures 3 and 4, or similar methods. The policing functions serve to limit the time that the device will possess the transmit channel. These functions also serve to restrain the device from obtaining the transmit channel again until a certain amount of time has passed after the talk button is released by the user.

Figure 2 shows a very specific implementation for a user device capable of implementing the transmit channel policing methods provided by embodiments of the invention. It is to be clearly understood that the particular arrangement of components of Figure 2 is only one example. The user device 300 may of course include additional components not shown in Figure 2. The same functionality may be delivered with a different breakdown of components.

Referring now to Figures 3 and 4, an example of transmit channel policing according to an embodiment of the invention will now be described in the context of an active dispatch call session for a group of wireless devices in a half-duplex group call.

Each wireless device may for example be as described with reference to Figure 2 above, but is not limited thereto.

In the communications system, the THD device which is to be policed, first would have had to be powered up and registered on the network at step 400. In step 401, during or following registration, the system sends parameters to control transmit channel utilization. In the example that follows this is a maximum talk time (MTT) which is then stored in the data store. More generally, the device receives the parameter(s) and starts to operate in accordance with the parameter(s). In another embodiment, the parameters are not sent over the air, but rather are configured during manufacture or otherwise prior to deployment. Transmit channel policing processing is initialized at step 402 with the loading of a maximum talk time (MTT) parameter. Preferably, the MTT, or a parameter representing the MTT, is stored by the network, for example in D-HLR 120 for the network of Figure 1A. This is downloaded upon power up or registration of the device. In another embodiment, all devices are configured with a default MTT which can then be used without requiring any change to the air interface. The transmit channel policing processing remains idle until the user device receives input initiating THD mode at step 403. After being granted the transmit channel, the user device thereafter begins to operate in THD mode at step 404. If the device is still in THD mode upon expiry of the MTT, the device will automatically release the channel. Any appropriate mechanism for timing the THD duration can be employed. A specific example has been included in Figure 3. In this example, transmit channel policing processing starts a timer function at step 406 to keep track of the passage of an MTT duration. If an interrupt is received as indicated at step 410, for example as a result of the user releasing the talk button or the call ending, the transmit channel is released as indicated at step 414. Alternatively, if the MTT has expired (yes path 412), then the transmit channel is also released at step 414. Thus at the end of the method steps, the transmit channel will be available to other users. At the latest this will occur a duration of MTT after the user started transmitting.

In a preferred embodiment, a plurality of different levels of service or policy sets are defined, each with a respective MTT that may or may not be the same as that associated with other levels of service. The maximum talk time of a particular wireless device therefor is set based upon the level of service associated with the wireless device. Example values of MTT include but are not limited to seconds, minutes, and indefinite. A setting of indefinite could be policy based and assigned to important users or users responsible for critical operations who should be allowed to possess the transmit channel until they see fit to release it. Other possible times for MTT may be associated with for example Gold, Silver, and Bronze service level agreements. In the case where the MTT is set such that the device may possess the transmit channel indefinitely, steps 410 and 412 will be repeated until the user releases the talk button, at which point an interrupt will be assessed at step 412 and the transmit channel is released. Alternatively, no timing of the THD mode needs to take place in such a device.

Referring to Figure 4, another example of transmit channel policing provided by another embodiment of the invention will now be described.

As with the steps performed in the embodiment depicted in Figure 3, the THD device of Figure 4 which is to be policed, first would have had to be powered up and registered on the network at step 450. The parameters are sent to the user devices at step 451. Transmit channel policing processing initializes at step 452 with the loading of a maximum talk time (MTT) parameter and a back off time (BOT). For the duration of the BOT, after a user releases a talk button, the user cannot request the transmit channel by again pressing the talk button. In this way a user is prevented from requiring the transmit channel before anyone else gets a chance to request the transmit channel.

A number of ways of preventing a particular user from accessing the channel following release may be implemented. A particular example is given below, but different methods may be used. The transmit channel policing processing remains idle until the user device receives input initiating THD mode at step 453. The transmit channel policing processing checks to see if the BOT timer has expired (either because it never started, or because a prior started BOT timer is running) at step 455. This would be the case if a user pressed the talk button within the duration of BOT, after previously releasing the channel. If the BOT timer has not expired, the process proceeds back to prior to step 453 when the device detected user input. In the case where the BOT timer is expired, the device is allowed to transmit the request for THD mode, and once the transmit channel is granted, the device will enter THD mode. Steps 404, 406, 410, 412, 414 of the method is the same as those described already with reference to Figure 3. At step 460, following release of the transmission channel the BOT timer is started at step 460.

In a preferred embodiment, for each of the plurality of different levels of service or policy sets is a BOT which may or may not be the same as that associated with other levels of service. The back off time of a particular wireless device therefor is set based upon the level of service associated with the wireless device. Example values of BOT include but are not limited to seconds, minutes, and zero. A set value of zero could be policy based and assigned to important users or users responsible for critical operations, so that they can possess the transmit channel as soon as they wish after having released the talk button. The other possible times for BOT may be associated with for example Gold, Silver, and Bronze SLAs (service level agreements) in which less BOT is assigned to some levels than that which is assigned to others. In the case where the BOT is set to zero, steps 453 would always return a false as the BOT timer would never be started for that particular device under that SLA. Hence the device would simply proceed to step 454 and enter THD mode.

It should be understood that in the embodiments discussed above other processes may be running on the user device and other steps may be inserted into the methods described without changing the nature of the example embodiment.

In some embodiments, the method, system, and device are adapted to provide peripheral support for wired devices to participate in a wireless call via a network interworking function, so that although the devices are not within the wireless network, they appear as though they are, and are able to participate therein. Hence, according to this embodiment, not all of the devices in a PTT™ group are wireless, and transmit channel messaging occurs in an analogous manner to that described above in PTT™ groups where one or more of the devices is a stationary or otherwise non-wireless wired device. Hence, a wireless PTT™ session may have wired or landline based devices participating in the PTT™ session in accordance with the embodiments, adapted to police the transmit channel.

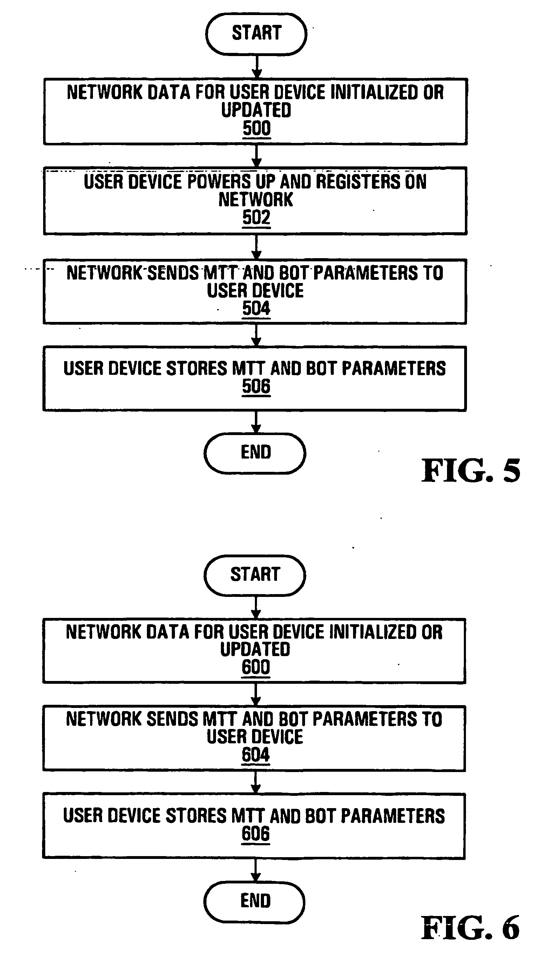

Some embodiments of the invention provide for the provisioning of the information such as the MTT and the BOT for storage in the wireless device. Two such examples are illustrated in Figures 5, and 6.

Referring to Figure 5, a user device is provisioned with the MTT and BOT parameters whenever the network data for that user changes, or when the device is first initialized at step 500, upon power up of the user device. After the user's device powers up and registers at step 502, the network sends MTT and BOT parameters to the user device in step 504. The transfer of this information may occur within a registration accept message through a new control channel, an existing control channel, or through a traffic channel. In step 506 the user device stores MTT and BOT parameters.

Referring to Figure 6, a user device is provisioned with the MTT and BOT parameters whenever the network data for that user changes, or when the device is first initialized at step 600. Even if the user device is idle, the network sends MTT and BOT parameters to the user device in step 604.

These values are transmitted over a channel from the network to the user device. This can be transmitted on a separate control channel, or on a traffic channel. In an embodiment implemented in the iDEN™ system of Motorola™, a preferred logical control channel used to send the MTT and BOT is the data link layer sometimes referred to as layer 2. The MTT and BOT could be sent over the L2 control channel, such as the dedicated control channel (DCCH) or packet channel, or an associated control channel (ACCH). In step 606 the user device stores MTT and BOT parameters in the data store.

Numerous modifications and variations of the present invention are possible in light of the above teachings. It is therefore to be understood that within the scope of the appended claims, the invention may be practiced otherwise than as specifically described herein.

## Claims

1. A system comprising a talk control element (56) for use with a network system (50) adapted to deliver walkie-talkie-like communications capabilities between wireless devices (30, 52, 54, 300), the network system (50) allowing only one wireless device (52) to occupy a talk channel at a given time, the talk control element (56) being adapted to transmit at least one parameter (401) to each wireless device (30, 52, 54 300), said parameter indicating a maximum amount of time each wireless device (30, 52, 54, 300) is allowed to continuously occupy the talk channel, and each wireless device (30, 52, 54, 300) comprising a talk processing element (320) for processing said parameter and being adaptated to start a timer when a transmit channel has been granted and to release said transmit channel when the time indicated by said parameter has expired.

2. A system according to claim 1 forming part of and/or in combination with the network system (50).

3. A system according to claim 1 wherein the talk control element (56) is external to the network system (50).

4. A system according to any one of claims 1 to 3 wherein the at least one parameter comprises a maximum talk time parameter for each wireless device representing a maximum amount of time the wireless device can continuously occupy the talk channel.

5. A system according to any one of claims 1 to 4 wherein the at least one parameter comprises a back off time parameter for each wireless device representing a minimum time after releasing a talk channel before the wireless device can again request the talk channel.

6. A system according to any of claims 1 to 5 adapted to send the at least one parameter (401) upon registration (400) of the wireless device.

7. A system according to any one of claims 1 to 6 adapted to, for each wireless device (30, 52, 54, 300), send the at least one parameter (401) upon registration (400) of the wireless device only if a change to the at least one parameter has occurred.

8. A network system (50) including or adapted to co-operate with a system according to any one of claims 1 to 7.

9. A network system according to claim 8 wherein the network is implemented using at least one of PoC, IDEN, 1xRTT CDMA, UMTS, GSM/GPRS and TDMA.

10. A wireless device (30, 52, 54, 300) adapted to participate in a network delivered walkie-talkie-like communications session in a network system (50) allowing only one wireless device (52) to occupy a talk channel at a given time, the wireless device comprising:
means for receiving at least one parameter (401) from a talk control element (56), said parameter indicating a maximum amount of time said wireless device (52, 54) is allowed to continuously occupy the talk channel; and
a talk processing element (320) for processing said parameter and being adapted to start a timer when a transmit channel has been granted and to release said transmit channel when the time indicated by said parameter has expired.

11. A wireless device (30, 52, 54, 300) according to claim 10 adapted to prevent the generation of a request for the talk channel for a specified period of time following release of the talk channel by the wireless device.

12. A method of controlling a wireless device (30, 52, 54, 300) in a network system (50) configured to deliver walkie-talkie-like communications capabilities between wireless devices (30, 52, 54, 300), the network system (50) allowing only one wireless device (52) to occupy a talk channel at a given time, the method comprising:
transmitting at least one parameter (401) to each wireless device (30, 52, 54 300), said parameter indicating a maximum amount of time each wireless device (30, 52, 54, 300) is allowed to continuously occupy the talk channel; and
at each wireless device processing said parameter, starting a timer when a transmit channel has been granted and releasing said transmit channel when the time indicated by said parameter has expired.

13. A method according to claim 12 wherein the at least one parameter comprises a maximum talk time and/or a back-off time (455).

14. A method according to claim 12 or claim 13 wherein the at least one parameter is transmitted to each wireless device upon registration of the device with the network (400,401).

15. A machine readable medium embodying program code means executable in the system of any one of claims 1 to 7 or the wireless device (300) of claim 10 or claim 11 for implementing the method of any one of claims 12 to 14.

## Patentansprüche

1. System mit einem Gesprächssteuerelement (56) zur Verwendung mit einem Netzwerksystem (50), das dazu ausgelegt ist, Walkie-Talkieähnliche Kommunikationsfähigkeiten zwischen drahtlosen Vorrichtungen (30, 52, 54, 300) zu liefern, wobei das Netzwerksystem (50) nur einer drahtlosen Vorrichtung (52) erlaubt, den Gesprächskanal zu einem gegebenen Zeitpunkt zu belegen, das Gesprächssteuerelement (56) dazu ausgelegt ist, mindestens einen Parameter (401) an jede drahtlose Vorrichtung (30, 52, 54, 300) zu übertragen, wobei der Parameter eine Maximalmenge an Zeit anzeigt, während der jede drahtlose Vorrichtung (30, 52, 54, 300) den Gesprächskanal kontinuierlich belegen darf, wobei jede drahtlose Vorrichtung (30, 52, 54, 300) ein Gesprächsverarbeitungselement (320) zum Verarbeiten des Parameters aufweist und das dazu ausgelegt ist, einen Zeitgeber zu starten, wenn ein Übertragungskanal gewährt worden ist, und den Übertragungskanal freizugeben, wenn die vom Parameter angezeigte Zeit abgelaufen ist.

2. System nach Anspruch 1, das einen Teil des Netzwerksystems (50) bildet, und/oder in Kombination mit dem Netzwerksystem (50).

3. System nach Anspruch 1, wobei das Gesprächssteuerelement (56) außerhalb des Netzwerksystems (50) ist.

4. System nach einem der Ansprüche 1 bis 3, wobei der mindestens eine Parameter einen Maximalgesprächszeitparameter für jede drahtlose Vorrichtung aufweist, der eine Maximalmenge an Zeit darstellt, während der die drahtlose Vorrichtung den Gesprächskanal kontinuierlich belegen kann.

5. System nach einem der Ansprüche 1 bis 4, wobei der mindestens eine Parameter einen Back-off-Zeit-Parameter für jede drahtlose Vorrichtung aufweist, die eine Minimalzeit nach dem Freigeben eines Gesprächskanals darstellt, bevor die drahtlose Vorrichtung wieder den Gesprächskanal wieder anfordern kann.

6. System nach einem der Ansprüche 1 bis 5, das dazu geeignet ist, den mindestens einen Parameter (401) bei Registrierung (400) der drahtlosen Vorrichtung zu senden.

7. System nach einem der Ansprüche 1 bis 6, das dazu geeignet ist, für jede drahtlose Vorrichtung (30, 52, 54, 300) den mindestens einen Parameter (401) bei Registrierung (400) der drahtlosen Vorrichtung nur zu senden, wenn eine Änderung am mindestens einen Parameter erfolgt ist.

8. Netzwerksystem (50), das ein System nach einem der Ansprüche 1 bis 7 aufweist, oder dazu geeignet ist, damit zu kooperieren.

9. Netzwerksystem nach Anspruch 8, wobei das Netzwerk unter Verwendung von mindestens einem aus PoC, IDEN, 1xRTT CDMA, UMTS, GSM/GPRS und TDMA implementiert ist.

10. Drahtlose Vorrichtung (30, 52, 54, 300), die dazu ausgelegt ist, in einer netzwerkgelieferten Walkie-Talkie-ähnlichen Kommunikationssitzung in einem Netzwerksystem (50) teilzunehmen, das nur einer drahtlosen Vorrichtung (52) erlaubt, einen Gesprächskanal zu einem gegebenen Zeitpunkt zu belegen, wobei die drahtlose Vorrichtung Folgendes aufweist:
eine Einrichtung zum Empfangen mindestens eines Parameters (401) von einem Gesprächssteuerelement (56), wobei der Parameter eine Maximalmenge an Zeit anzeigt, welche die drahtlose Vorrichtung (52, 54) den Gesprächskanal kontinuierlich belegen darf, und
ein Gesprächsverarbeitungselement (320) zum Verarbeiten des Parameters und das dazu ausgelegt ist, einen Zeitgeber zu starten, wenn ein Übertragungskanal gewährt worden ist, und den Übertragungskanal freizugeben, wenn die vom Parameter angezeigte Zeit abgelaufen ist.

11. Drahtlose Vorrichtung (30, 52, 54, 300) nach Anspruch 10, die dazu ausgelegt ist, die Erstellung einer Anforderung auf den Gesprächskanal für eine spezifizierte Zeitdauer nach dem Freigeben des Gesprächskanals von der drahtlosen Vorrichtung zu verhindern.

12. Verfahren zum Steuern einer drahtlosen Vorrichtung (30, 52, 54, 300) in einem Netzwerksystem (50), das dazu konfiguriert ist, Walkie-Talkieähnliche
Kommunikationsfähigkeiten zwischen drahtlosen Vorrichtungen (30, 52, 54, 300) zu liefern, wobei das Netzwerksystem (50) nur einer drahtlosen Vorrichtung (52) erlaubt, den Gesprächskanal zu einem gegebenen Zeitpunkt zu belegen, wobei in dem Verfahren
mindestens ein Parameter (401) an jede drahtlose Vorrichtung (30, 52, 54, 300) übertragen wird, wobei der Parameter eine Maximalmenge an Zeit anzeigt, die jede drahtlose Vorrichtung (30, 52, 54, 300) den Gesprächskanal kontinuierlich belegen darf, und an jeder drahtlosen Vorrichtung der Parameter bearbeitet wird, indem ein Zeitgeber gestartet wird, wenn ein Übertragungskanal gewährt worden ist, und der Übertragungskanal freigegeben wird, wenn die vom Parameter angezeigte Zeit abgelaufen ist.

13. Verfahren nach Anspruch 12, wobei der mindestens eine Parameter eine Maximalgesprächszeit und/oder eine Back-off-Zeit (455) aufweist.

14. Verfahren nach Anspruch 12 oder 13, wobei der mindestens eine Parameter an jede drahtlose Vorrichtung bei Registrierung der Vorrichtung mit dem Netzwerk (400, 401) übertragen wird.

15. Maschinenlesbares Computermedium, das Programmcodemittel verkörpert, die in dem System nach einem der Ansprüche 1 bis 7 oder die drahtlose Vorrichtung (300) nach Anspruch 10 oder 11 zum Implementieren des Verfahren nach einem der Ansprüche 12 bis 14 ausführbar sind.

## Revendications

1. Système comprenant un élément (56) de commande de conversation à utiliser avec un système de réseau (50) adapté pour proposer des communications en mode messagerie vocale instantanée entre des dispositifs sans fil (30, 52, 54, 300), le système de réseau (50) permettant à un seul dispositif sans fil (52) d'occuper un canal de conversation à un moment donné, l'élément (56) de commande de conversation étant adapté pour émettre au moins un paramètre (401) à chaque dispositif sans fil (30, 52, 54, 300), ledit paramètre indiquant une durée maximale pendant laquelle chaque dispositif sans fil (30, 52, 54, 300) est habilité à occuper sans interruption le canal de conversation, et chaque dispositif sans fil (30, 52, 54, 300) comprenant un élément (320) de traitement de conversation pour traiter ledit paramètre et étant adapté pour démarrer une minuterie lorsqu'un canal d'émission a été octroyé et pour libérer ledit canal d'émission lorsque la durée indiquée par ledit paramètre a expiré.

2. Système selon la revendication 1 formant une partie du et/ou est combiné au système de réseau (50).

3. Système selon la revendication 1 dans lequel l'élément (56) de commande de conversation est externe au système de réseau (50).

4. Système selon l'une quelconque des revendications 1 à 3 dans lequel l'au moins un paramètre comprend un paramètre de durée de conversation maximale pour chaque dispositif sans fil représentant une durée maximale pendant laquelle le dispositif sans fil peut occuper sans interruption le canal de conversation.

5. Système selon l'une quelconque des revendications 1 à 4 dans lequel l'au moins un paramètre comprend un paramètre de délai d'attente pour chaque dispositif sans fil représentant un délai minimal après libération d'un canal de conversation avant que le dispositif sans fil ne puisse réclamer de nouveau le canal de conversation.

6. Système selon l'une quelconque des revendications 1 à 5 adapté pour envoyer l'au moins un paramètre (401) lors de l'enregistrement (400) du dispositif sans fil.

7. Système selon l'une quelconque des revendications 1 à 6 adapté, pour chaque dispositif sans fil (30, 52, 54, 300), pour envoyer l'au moins un paramètre (401) lors de l'enregistrement (400) du dispositif sans fil uniquement si un changement s'est produit pour l'au moins un paramètre.

8. Système de réseau (50) comportant ou adapté pour coopérer avec un système selon l'une quelconque des revendications 1 à 7.

9. Système de réseau selon la revendication 8 dans lequel le réseau est mis en oeuvre en utilisant au moins l'un parmi PoC, IDEN, CDMA 1xRTT, UMTS, GSM/GPRS et TDMA.

10. Dispositif sans fil (30, 52, 54, 300) adapté pour participer à une session de communications en mode messagerie vocale instantanée procurée par un réseau dans un système de réseau (50) permettant à un seul dispositif sans fil (52) d'occuper un canal de conversation à un moment donné, le dispositif sans fil comprenant :
un moyen pour recevoir au moins un paramètre (401) à partir d'un élément (56) de commande de conversation, ledit paramètre indiquant une durée maximale pendant laquelle ledit dispositif sans fil (52, 54) est habilité à occuper sans interruption le canal de conversation ; et
un élément (320) de traitement de conversation pour traiter ledit paramètre et étant adapté pour démarrer une minuterie lorsqu'un canal d'émission a été octroyé et pour libérer ledit canal d'émission lorsque la durée indiquée par ledit paramètre a expiré.

11. Dispositif sans fil (30, 52, 54, 300) selon la revendication 10 adapté pour empêcher la génération d'une demande pour le canal de conversation pendant un délai spécifié après libération du canal de conversation par le dispositif sans fil.

12. Procédé de commande d'un dispositif sans fil (30, 52, 54, 300) dans un système de réseau (50) configuré pour proposer des communications en mode messagerie vocale instantanée entre des dispositifs sans fil (30, 52, 54, 300), le système de réseau (50) permettant à un seul dispositif sans fil (52) d'occuper un canal de conversation à un moment donné, le procédé comprenant le fait :
d'émettre au moins un paramètre (401) à chaque dispositif sans fil (30, 52, 54 300), ledit paramètre indiquant une durée maximale pendant laquelle chaque dispositif sans fil (30, 52, 54, 300) est habilité à occuper sans interruption le canal de conversation ; et
traiter, au niveau de chaque dispositif sans fil, ledit paramètre, en démarrant une minuterie lorsqu'un canal d'émission a été octroyé et libérant ledit canal d'émission lorsque la durée indiquée par ledit paramètre a expiré.

13. Procédé selon la revendication 12 dans lequel l'au moins un paramètre comprend une durée de conversation maximale et/ou un délai d'attente (455).

14. Procédé selon la revendication 12 ou la revendication 13 dans lequel l'au moins un paramètre est émis à chaque dispositif sans fil lors de l'enregistrement du dispositif avec le réseau (400, 401).

15. Support lisible par machine mettant en oeuvre un moyen de code de programme exécutable dans le système de l'une quelconque des revendications 1 à 7 ou dans le dispositif sans fil (300) de la revendication 10 ou de la revendication 11 pour mettre en oeuvre le procédé de l'une quelconque des revendications 12 à 14.
